# EUROPÄISCHE PATENTANMELDUNG

(11) **EP 4 303 048 A1**
(43) Veröffentlichungstag der Anmeldung: **10.01.2024**
(21) Anmeldenummer: 22208849.4
(22) Anmeldetag: 22.11.2022
(51) Int. Cl.: B60J 10/16, B60J 10/24, B60J 10/30

(54) **ABDECKPROFIL FÜR FAHRZEUGE**

(30) Priorität: 05.07.2022 DE 202022103749 U
(71) Anmelder: Knaus Tabbert AG, 94118 Jandelsbrunn (DE)
(72) Erfinder: KORNEXL, Christian, 94133 Röhrnbach (DE)
(74) Vertreter: advotec.

(57) **Zusammenfassung**

Die Erfindung betrifft ein Abdeckprofil zum Abdecken von Seitenwandfalzen von Fahrzeugen, wie zum Beispiel Wohnwägen, Reisemobilen oder dergleichen, oder von Spalten (18) zwischen Kederschienen (12) und Seitenwandelementen (9) an solchen Fahrzeugen, umfassend einen Abdeckabschnitt (2) zum Abdecken der Falze oder Spalte (18) und einen Aufnahmeabschnitt (3) zur Aufnahme eines Leuchtmittels, wobei zumindest der Abdeckabschnitt (2) aus einem elastischen Material gefertigt ist und wobei der Aufnahmeabschnitt (3) transluzent ausgebildet ist.

## Beschreibung

Die vorliegende Erfindung betrifft ein Abdeckprofil zum Abdecken von Seitenwandfalzen von Fahrzeugen, wie zum Beispiel Wohnwagen, Reisemobilen oder dergleichen, oder von Spalten zwischen Kederschienen und Seitenwandelementen an solchen Fahrzeugen.

Kederschienen finden vielfach Anwendung an Fahrzeugen, insbesondere Reisefahrzeugen wie Wohnwagen, Reisemobilen oder dergleichen. Solche Kederschienen dienen beispielsweise der Befestigung von Vorzelten an der Seitenwand eines Wohnwagens oder Wohnmobils. Dabei werden beispielsweise verdickte Randbereiche eines solchen Zelts in die Kederschiene eingefädelt. Die Kederschiene selbst wird oft in hierfür vorgesehene Vertiefungen von Seitenwandelementen eines Fahrzeugs eingeklebt oder eingeschraubt. Dabei ergibt sich häufig ein unschöner Spalt zwischen dem Seitenwandelement des Fahrzeugs und der Kederschiene.

Der vorliegenden Erfindung liegt die Aufgabe zugrunde, die bekannten Nachteile zu überwinden und insbesondere die Seitenwand eines Fahrzeuges, wie beispielsweise eines Wohnwagens oder Reisemobils, optisch zu optimieren.

Diese Aufgabe wird erfindungsgemäß durch ein Abdeckprofil mit den Merkmalen des Anspruchs 1 gelöst. Das erfindungsgemäße Abdeckprofil umfasst einen Abdeckabschnitt zum Abdecken der Falze oder Spalte und einen Aufnahmeabschnitt zur Aufnahme eines Leuchtmittels, wobei zumindest der Abdeckabschnitt und vorzugsweise auch der Aufnahmeabschnitt aus einem elastischen Material gefertigt sind, wobei der Aufnahmeabschnitt transluzent ausgebildet ist.

Mit dem erfindungsgemäßen Abdeckprofil ist sowohl ein Abdecken der unschönen Spalte zwischen den Kederschienen und den Seitenwandelementen und gleichzeitig eine die Seitenwand eines Fahrzeugs optisch optimierende Beleuchtung möglich. Durch die transluzente Ausbildung des Aufnahmeabschnitts ist eine optisch ansprechende Beleuchtung eines Fahrzeugs mit einem äußerst geringen Aufwand möglich. Zur Beleuchtung muss lediglich ein Leuchtmittel in den Aufnahmeabschnitt eingebracht werden, welches beim Beleuchten durch den Aufnahmeabschnitt hindurchscheint und das Fahrzeug beleuchtet. Dagegen ist der Abdeckabschnitt in der Regel undurchsichtig ausgebildet, so dass ein Spalt zwischen einer Kederschiene und einem Seitenwandelement optimal abgedeckt werden kann. Durch die Tatsache, dass das Abdeckprofil aus einem elastischen Material gefertigt ist, passt sich dieses optimal an verschiedene Geometrien von Seitenwandfalzen, Spalten usw. an und wirkt auch abdichtend.

In der Regel ist der Aufnahmeabschnitt aus transluzentem Silikon gefertigt. Ein solches Material ist optimal in der Lichtdurchlässigkeit bei gleichzeitiger perfekter Elastizität.

Mit Vorteil ist der Abdeckabschnitt aus einem eingefärbten Silikon gefertigt und vorzugsweise lippenartig ausgebildet. In der Regel ist der Abdeckabschnitt in der gleichen Farbe wie das Seitenwandelement, an welchem es angeordnet ist, eingefärbt. In Kombination mit der lippenartigen Ausbildung ist so eine flächenbündige Anpassung des Abdeckprofils an eine Seitenwand eines Fahrzeuges möglich, bei der sich der Abdeckbereich aufgrund seiner Farbe optisch kaum abhebt.

Vorzugsweise ist das erfindungsgemäße Abdeckprofil durch Koextrusion, insbesondere Koextrusion eines transluzenten und eines eingefärbten Silikons herstellbar. Dadurch ist das erfindungsgemäße Abdeckprofil einfach und kostengünstig in der Herstellung.

Bei einer besonders bevorzugten Ausführungsform des erfindungsgemäßen Abdeckprofils weist der Aufnahmeabschnitt einen Aufnahmekanal zur Aufnahme eines Leuchtmittels auf. Mit einem solchen Aufnahmekanal ist es besonders schnell und einfach möglich, beispielsweise ein LED-Band oder eine LED-Leiste in den Aufnahmekanal zu schieben und so den Aufnahmeabschnitt zu beleuchten. Bei einer bevorzugten Ausführungsform des erfindungsgemäßen Abdeckprofils ist im Aufnahmeabschnitt ein LED-Band oder eine LED-Leiste angeordnet. Bei einer umlaufenden Kederschiene ist es mit einer solchen Kombination optimal möglich, eine umlaufende, durchgängige Beleuchtung an einem Campingfahrzeug zu schaffen. Das erfindungsgemäße Abdeckprofil kann lösbar mit einer Kederschiene verbunden sein. Hierzu wird in der Regel ein Teil des Aufnahmeabschnitts in eine Profilaufnahme der Kederschiene eingesteckt. Der Abdeckabschnitt des Abdeckprofils erstreckt sich vom Aufnahmeabschnitt über einen abzudeckenden Spalt und liegt in der Regel auf der Oberfläche eines Seitenwandelements abdichtend auf.

Mit Vorteil ist der Aufnahmeabschnitt gerippt oder gezahnt ausgebildet und wirkt vorzugsweise mit einem komplementär ausgebildeten Aufnahmeabschnitt einer Kederschiene zusammen. Auf diese Art und Weise kann das Abdeckprofil sicher in der Kederschiene gehalten werden.

Die vorliegende Erfindung betrifft ferner eine Kederschiene mit einem ersten Aufnahmeabschnitt zur Aufnahme eines zu befestigenden Gegenstands, wie beispielsweise eines Vorzelts, sowie einem zweiten Aufnahmeabschnitt, in welchem ein Abdeckprofil nach einem der Ansprüche 1 bis 7 aufgenommen ist.

Die vorliegende Erfindung betrifft ferner ein Fahrzeug, insbesondere einen Wohnwagen, ein Wohnmobil oder dergleichen, mit einer Seitenwand und einer Kederschiene, wobei ein Spalt zwischen der Seitenwand und der Kederschiene mit einem Abdeckprofil nach einem der Ansprüche 1 bis 7 abgedeckt ist.

Weitere Vorteile und vorteilhafte Ausgestaltungen des Gegenstandes der Erfindung sind der Beschreibung, der Zeichnung und den Ansprüchen entnehmbar. In der Zeichnung zeigen:
- Fig. 1: einen Querschnitt durch ein erfindungsgemäßes Abdeckprofil;
- Fig. 2: einen Querschnitt durch eine Seitenwand eines Wohnwagens im Bereich einer Kederschiene;
- Fig. 3: den Seitenwandabschnitt von Fig. 2 mit integriertem Abdeckprofil;

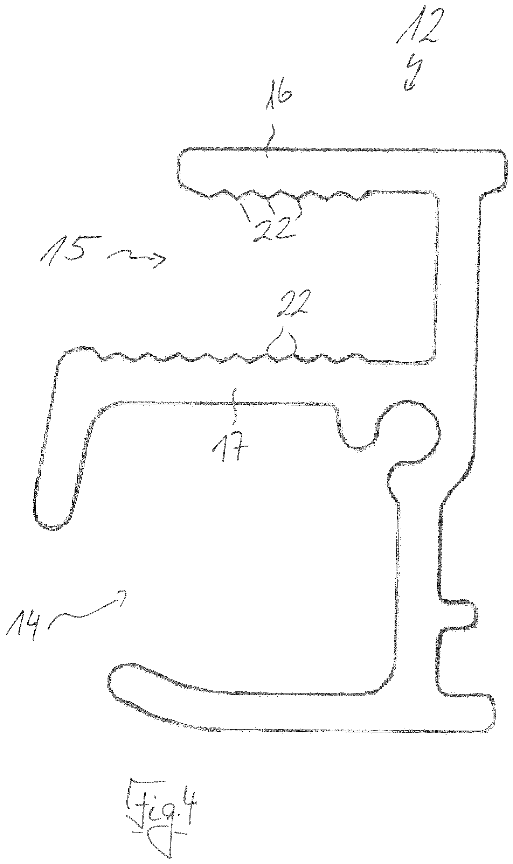

- Fig. 4: einen Querschnitt durch eine erfindungsgemäße Kederschiene; und
- Fig. 5: eine Seitenansicht eines erfindungsgemäßen Fahrzeugs.

Gleiche oder funktionsgleiche Elemente werden nachfolgend mit den gleichen Bezugszeichen gekennzeichnet.

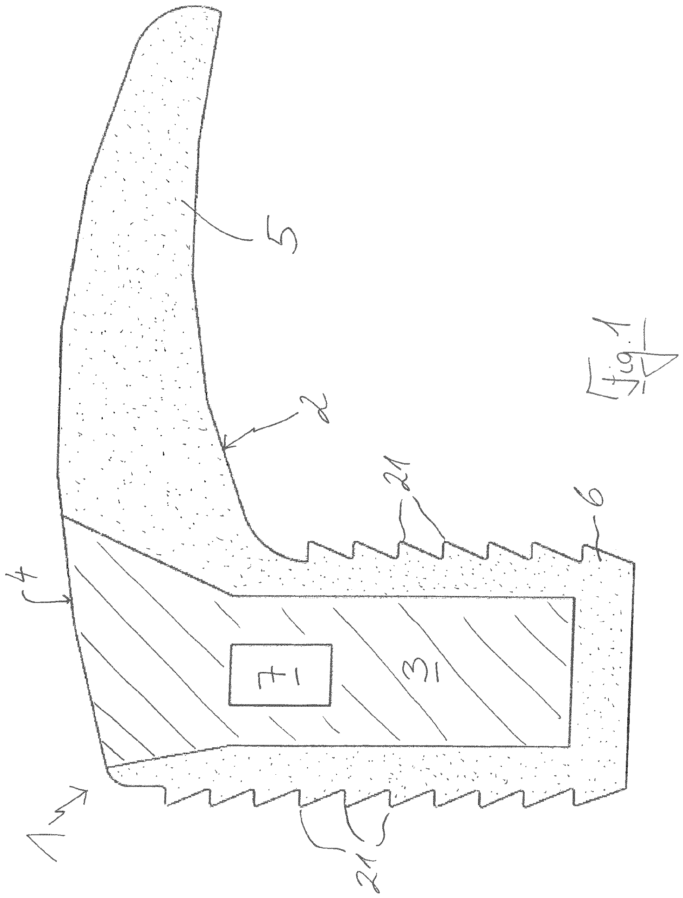

Fig. 1 zeigt ein erfindungsgemäßes Abdeckprofil 1, welches einen lippenartigen Abdeckabschnitt 2 sowie einen transluzent ausgebildeten Aufnahmeabschnitt 3 umfasst. Das Abdeckprofil 1 ist durch Koextrusion eines transluzenten Silikons, welches den Aufnahmeabschnitt 3 bildet, und eines weiß eingefärbten Silikons, welches den Abdeckabschnitt 2 bildet, hergestellt. Der Aufnahmeabschnitt 3 ist seitlich und an seinem unteren Ende vom eingefärbten Silikon des Abdeckabschnitts 2 umgeben. Lediglich das obere Ende 4 ist nicht vom eingefärbten Silikon des Abdeckabschnitts 2 umgeben, sondern frei und damit sichtbar. Der Abdeckabschnitt 2 umfasst einen lippenartigen Abschnitt 5 und einen Befestigungsabschnitt 6 zum Befestigen des Abdeckprofils 1 im Aufnahmeabschnitt einer Kederschiene. Der Befestigungsabschnitt ist gezackt ausgebildet; die Zacken sind mit dem Bezugszeichen 21 gekennzeichnet.

Im Aufnahmeabschnitt 3 ist ein Aufnahmekanal 7 mit rechteckigem Querschnitt vorgesehen, in welchem ein hier nicht dargestelltes LED-Band integriert ist.

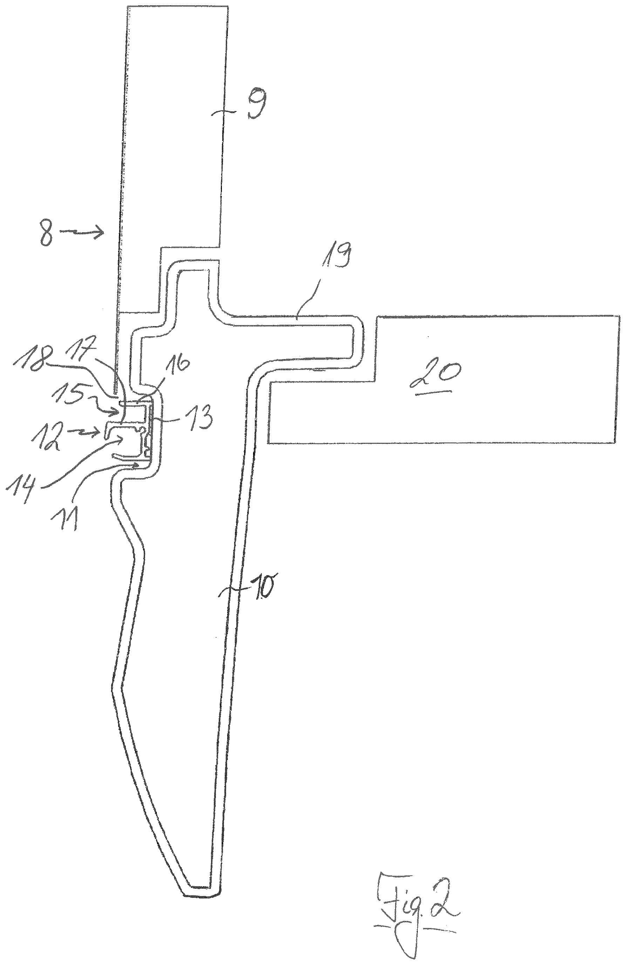

Fig. 2 zeigt einen Querschnitt durch eine Seitenwand 8 eines Wohnwagens. Die Seitenwand 8 umfasst ein Seitenwandelement 9 und ein Rahmenprofil 10. In einer Vertiefung 11 des Rahmenprofils 10 ist eine aus Aluminium gefertigte Kederschiene 12 mittels Klebstoff 13 fixiert. Die Kederschiene 12 umfasst einen ersten Aufnahmeabschnitt 14 zur Aufnahme eines Randbereichs eines Vorzelts. Die Kederschiene 12 umfasst ferner einen zweiten Aufnahmeabschnitt 15 zur Aufnahme des Aufnahmeabschnitts 3 des Abdeckprofils 1. Der zweite Aufnahmeabschnitt 15 der Kederschiene 12 ist U-förmig ausgebildet, wobei ein Schenkel 16 kürzer ist als der gegenüberliegende Schenkel 17 und wobei beide Schenkel 16 und 17 an ihren sich gegenüberliegenden Seiten gezackt ausgebildet sind. Zwischen dem Schenkel 16 der Kederschiene 12 und dem Seitenwandelement 9 ist ein optisch nicht ansprechender Spalt 18 zu erkennen.

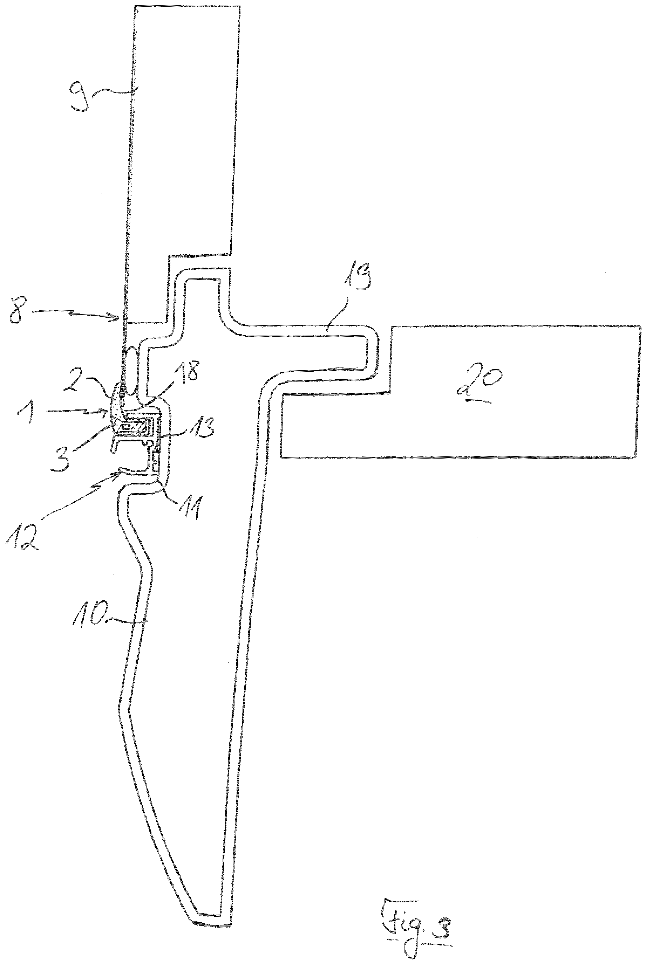

Fig. 3 zeigt die Situation von Fig. 2, wobei nun das erfindungsgemäße Abdeckprofil 1 im zweiten Aufnahmeabschnitt 15 der Kederschiene 12 integriert ist. Dabei wirken die Zacken 21 des Befestigungsabschnitts 6 des Profils 1 mit den Zacken 22 des zweiten Aufnahmeabschnitts 15 der Kederschiene 12 zusammen, so dass das Abdeckprofil 1 einen festen Sitz in der Kederschiene 12 erfährt. Der Spalt 18 ist nun durch den lippenartigen Abschnitt 5 des Abdeckabschnitts 2 des Abdeckprofils 1 komplett überdeckt. Der Abschnitt 5 ruht auf dem Seitenwandelement 9 und liegt durch seine Elastizität im Wesentlichen abdichtend auf dessen Oberfläche auf. Durch das im Aufnahmekanal 7 befindliche Leuchtmittel wird eine durchgehende Beleuchtung erzielt, indem das Licht des Leuchtmittels durch den transluzenten Aufnahmeabschnitt 3 strahlt und am oberen Ende 4 des Aufnahmeabschnitts 3 nach außen tritt und die Seitenwand 8 des Wohnwagens in Form einer durchgehenden Linie optisch eindrucksvoll beleuchtet.

Durch die spezielle Form des Aufnahmeabschnitts 3 des Profils 1 und des zweiten Aufnahmeabschnitts 15 der Kederschiene 12 ist eine äußerst einfache und sichere Montage des Abdeckprofils 1 an der Kederschiene 12 möglich. Mit dem Abdeckprofil 1 ist es ferner möglich, den Spalt 18 zwischen der Kederschiene 12 und dem Seitenwandelement 9 durch den eingefärbten und nicht transparenten Abdeckabschnitt 2 abzudecken. Der Abdeckabschnitt 2 ist in der Regel in der gleichen Farbe wie das Seitenwandelement 9 bzw. das Rahmenprofil 10 eingefärbt, so dass sich das Abdeckprofil 1 optisch kaum von der Seitenwand 8 abhebt. Neben der Abdeckfunktion kommt dem erfindungsgemäßen Abdeckprofil 1 auch eine Beleuchtungsfunktion zu, so dass gerade in der Kombination Beleuchtung/Abdeckung ein großer Vorteil gegenüber den bekannten Vorrichtungen aus dem Stand der Technik erzielt werden kann.

Das Rahmenprofil 10 weist eine Befestigungsnase 19 auf, welche mit einem Boden 20 des Wohnwagens verklebt ist.

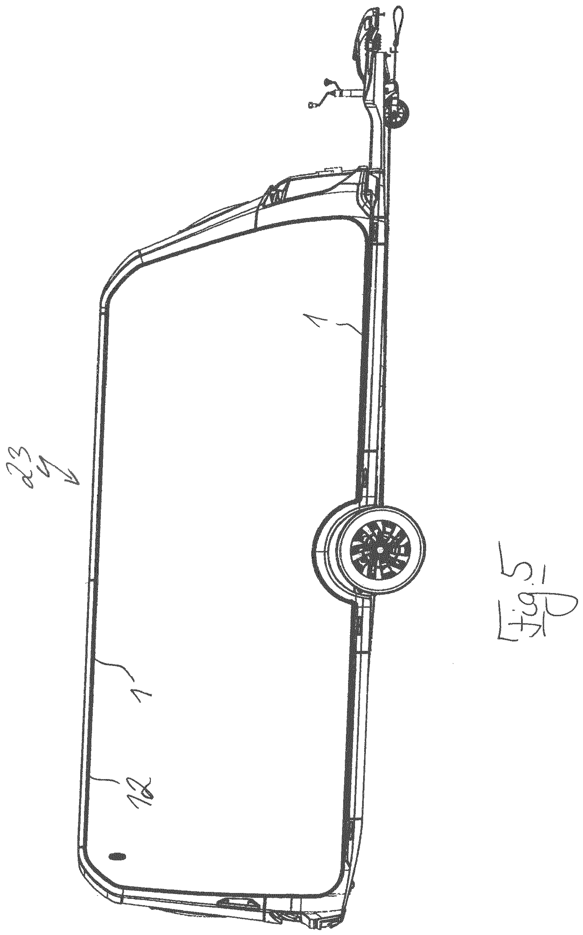

Fig. 5 zeigt eine Seitenansicht eines erfindungsgemäßen Wohnwagens 23 mit umlaufender Kederschiene 12 mit daran angeordnetem Abdeckprofil 1. Mit der vorliegenden Erfindung kann eine umlaufende Beleuchtung eines Wohnwagens auf einer Länge von 10 bis 20 Metern erzielt werden.

## Patentansprüche

1. Abdeckprofil zum Abdecken von Seitenwandfalzen von Fahrzeugen, wie zum Beispiel Wohnwägen, Reisemobilen oder dergleichen, oder von Spalten (18) zwischen Kederschienen (12) und Seitenwandelementen (9) an solchen Fahrzeugen, umfassend einen Abdeckabschnitt (2) zum Abdecken der Falze oder Spalte (18) und einen Aufnahmeabschnitt (3) zur Aufnahme eines Leuchtmittels, wobei zumindest der Abdeckabschnitt (2) aus einem elastischen Material gefertigt ist und wobei der Aufnahmeabschnitt (3) transluzent ausgebildet ist.

2. Abdeckprofil nach Anspruch 1, **dadurch gekennzeichnet, dass** der Aufnahmeabschnitt (3) aus transluzentem Silikon gefertigt ist.

3. Abdeckprofil nach Anspruch 1 oder 2, **dadurch gekennzeichnet, dass** der Abdeckabschnitt (2) aus eingefärbtem Silikon gefertigt ist und vorzugsweise lippenartig ausgebildet ist.

4. Abdeckprofil nach einem der vorhergehenden Ansprüche, **dadurch gekennzeichnet, dass** es durch Koextrusion, insbesondere durch Koextrusion eines transluzenten und eines eingefärbten Silikons, hergestellt ist.

5. Abdeckprofil nach einem der vorhergehenden Ansprüche, **dadurch gekennzeichnet, dass** der Aufnahmeabschnitt (3) einen Aufnahmekanal (7) zur Aufnahme eines Leuchtmittels aufweist.

6. Abdeckprofil nach einem der vorhergehenden Ansprüche, **dadurch gekennzeichnet, dass** im Aufnahmeabschnitt (3) ein LED-Band oder eine LED-Leiste angeordnet ist.

7. Abdeckprofil nach einem der vorhergehenden Ansprüche, **dadurch gekennzeichnet, dass** es insbesondere lösbar mit einer Kederschiene (12) verbunden ist.

8. Abdeckprofil nach einem der vorhergehenden Ansprüche, **dadurch gekennzeichnet, dass** der Aufnahmeabschnitt (3) gerippt und/oder gezackt ausgebildet ist.

9. Kederschiene zur Anordnung an einem Fahrzeug, insbesondere einem Wohnmobil oder einem Wohnwagen, umfassend einen ersten Aufnahmeabschnitt (14) zur Aufnahme eines Randbereichs eines in die Kederschiene (12) einzuspannenden Gegenstands, wie beispielsweise eines Vorzelts, ferner umfassend einen zweiten Aufnahmeabschnitt (15) zu Aufnahme eines Abdeckprofils nach einem der Ansprüche 1 bis 7.

10. Kederschiene nach Anspruch 9, **dadurch gekennzeichnet, dass** der zweite Aufnahmeabschnitt (15) als U-Profil ausgebildet ist, wobei die beiden Schenkel des U-Profils an ihren einander zugewandten Seiten gerippt und/oder gezackt ausgebildet sind.

11. Fahrzeug, insbesondere Wohnwagen, Wohnmobil oder dergleichen, mit einer Seitenwand (8) und einer Kederschiene (12), wobei ein Spalt (18) zwischen der Seitenwand (8) und der Kederschiene (12) von einem Abdeckprofil (1) nach einem der Ansprüche 1 bis 8 abgedeckt ist.
